# EUROPÄISCHE PATENTSCHRIFT

(11) **EP 4 411 438 B1**
(45) Veröffentlichungstag und Bekanntmachung des Hinweises auf die Patenterteilung: **23.07.2025**
(21) Anmeldenummer: 23208751.0
(22) Anmeldetag: 09.11.2023
(51) Int. Cl.: G02B 6/245, G02B 6/38

(54) **VORRICHTUNG UND VERFAHREN ZUR FASERZENTRIERUNG**
FIBER CENTERING APPARATUS AND METHOD
DISPOSITIF ET PROCÉDÉ DE CENTRAGE DE FIBRE

(30) Priorität: 06.02.2023 DE 102023102802
(43) Veröffentlichungstag der Anmeldung: 07.08.2024
(73) Patentinhaber: MD Elektronik GmbH, 84478 Waldkraiburg (DE)
(72) Erfinder: Pritz, Helmut, 84539 Ampfing (DE)

(56) Entgegenhaltungen:
- DE-C1- 4 202 371
- JP-A- 2001 013 375
- US-A- 4 134 641
- US-A1- 2015 205 044

## Beschreibung

### Technisches Gebiet

Die Erfindung betrifft eine Vorrichtung sowie ein Verfahren zur Faserzentrierung, insbesondere bei einer optischen Leitung.

### Stand der Technik

Leitungen werden im Stand der Technik verwendet, um Signale weiterzuleiten. Im Wesentlichen unterschiedet man optische und elektrische Leitungen, die jeweils optische oder elektrische Signale weiterleiten können. Im einfachsten Fall bestehen optische/elektrische Leitungen aus einer optischen/elektrischen Faser, welche die Signale weiterleitet, und einer Ummantelung, welche die Faser schützt und/oder isoliert. Die Ummantelung kann mehrere verschiedene Schichten umfassen. Die Leitungen können an zumindest einem freien Ende mit einem Steckverbinder konfektioniert werden, wodurch eine Verbindung zu einer weiteren Leitung oder einer Signalquelle oder -senke möglich ist. Bei einem Steckverbinder für eine optische Leitung wird an das freie Leitungsende eine Ferrule befestigt, d.h. in der Regel wird die Ferrule aufgeschweißt, gepresst oder geklebt. Bei einem Steckverbinder für eine elektrische Leitung wird an dem freien Leitungsende ein Kontakt befestigt, z.B. gecrimpt.

Im Idealfall ist eine Faser zentriert oder konzentrisch in einer Ummantelung angeordnet, d.h. die kreisrunde Faser weist in radialer Richtung immer eine gleichdicke kreisringförmige Ummantelung auf. Im Realfall liegt eine Faser oftmals nicht konzentrisch in einer Ummantelung.

Für die Signalweiterleitung an einem Steckverbinder spielt, insbesondere bei einer optischen Leitung und teilweise auch bei einer elektrischen Leitung, die Konzentrizität der befestigten Ferrule bzw. des befestigten Kontakts eine entscheidende Rolle. Eine Abweichung von einer konzentrischen Ausrichtung hat negative Auswirkungen auf die Signalqualität. Bei einer nicht-konzentrischen Ausrichtung der Ferrule oder des Kontakts ergeben sich Toleranzen im axialen Versatz zwischen zwei zusammengefügten Ferrulen oder Kontakten in einer Steckverbindung, was zu einer optischen Dämpfung bzw. bei einer elektrischen Steckverbindung zu Änderungen am Wellenwiderstand führt.

Die DE 42 02 371 C1 offenbart eine Vorrichtung und ein Verfahren zur Faserzentrierung einer Leitung.

### Beschreibung der Erfindung

Es ist daher eine Aufgabe der vorliegenden Erfindung einen optimalen Signalübergang in einer Steckverbindung zu gewährleisten, so dass die Performance des Stecksystems optimal genutzt werden kann.

Die oben genannte Aufgabe wird durch eine Vorrichtung nach Anspruch 1 sowie ein Verfahren nach Anspruch 6 gelöst. Weitere vorteilhafte Ausgestaltungsformen der Erfindung lassen sich den Unteransprüchen, der Beschreibung sowie den Zeichnungen entnehmen.

Insbesondere wird die oben genannte Aufgabe gelöst durch eine Vorrichtung zur Faserzentrierung einer Leitung, zumindest aufweisend eine Abmantelungsvorrichtung zum Abmanteln der Leitung in einem ersten Bereich, eine Fixiervorrichtung, die eingerichtet ist eine Faser der Leitung in dem abgemantelten ersten Bereich zu fixieren, und eine Bearbeitungsvorrichtung, die entlang eines äußeren Umfangs der Fixiervorrichtung entlang einer axialen Richtung (X) der Leitung bewegt werden kann, wobei die Bearbeitungsvorrichtung eingerichtet ist Teile der Ummantelung der Leitung, welche radial über den äußeren Umfang der Fixiervorrichtung überstehen, in einem zweiten Bereich von der Leitung zu entfernen.

Die vorliegende Vorrichtung ermöglicht es auf einfache Weise eine Leitung bereitzustellen, bei der die optische oder elektrische Faser, zumindest in einem Teilbereich (zweiter Bereich), konzentrisch zur umgebenden Ummantelung ausgerichtet ist. Durch die konzentrische Ausrichtung der Faser kann eine Ferrule oder ein Kontakt, die bevorzugt im zweiten Bereich an die Leitung konfektioniert werden, ebenfalls konzentrisch zur Faser ausgerichtet werden. In einer späteren Steckverbindung mit einem passenden Gegensteckverbinder, bei dem die Ferrule oder der Kontakt ebenfalls konzentrisch ausgerichtet ist, werden dadurch Toleranzen im axialen Versatz so gering wie möglich gehalten. So kann eine Signalübertragung mit sehr geringer optischer Dämpfung bzw. mit sehr geringen Änderungen am Wellenwiderstand bereitgestellt werden. Das Entfernen von Teilen der Ummantelung im zweiten Bereich hat keine negativen Einflüsse auf die Signalqualität. Die Faser umfasst bevorzugt eine optische Faser, da hier der Einfluss der Konzentrizität in der Regel stärker ist als bei einer elektrischen Faser. Eine optische Faser umfasst ein optisch leitendes Material, und eine elektrische Faser ein elektrisch leitendes Material.

Bevorzugt klemmt die Fixiervorrichtung die Faser direkt. Eine direkte Klemmung der Faser durch die Fixiervorrichtung hat den Vorteil, dass die Faser exakt in der Vorrichtung ausgerichtet werden kann, und somit eine sehr gute Konzentrizität erreicht werden kann. Die Auflage- bzw. Klemmfläche der Fixiervorrichtung und die aufgebrachte Klemmkraft sind bevorzugt an die zu klemmende Faser angepasst. So nimmt die Faser keinen Schaden und wird dennoch sicher in der Vorrichtung fixiert.

Bevorzugt umschließt die Fixiervorrichtung die Faser vollumfänglich. Durch das vollumfängliche Umschließen der Faser bildet die Fixiervorrichtung einen geschlossenen äußeren Umfang auf dem die Bearbeitungsvorrichtung präzise verschoben werden kann. Weiterhin wird die Faser in radialer Richtung präzise ausgerichtet und fixiert.

Bevorzugt entfernt die Bearbeitungsvorrichtung die Ummantelung durch mechanische Verfahren, insbesondere Fräsen oder Drehen. Weiterhin umfassen die mechanischen Verfahren bevorzugt abtragende Verfahren. Mechanische oder abtragende Verfahren wie Fräsen oder Drehen sind eine einfache und effektive Methode, um ungewollte Ummantelung von der Leitung zu lösen.

Bevorzugt entfernt die Bearbeitungsvorrichtung die Ummantelung durch thermische Verfahren, insbesondere den Einsatz von Lasern. Thermische Verfahren, wie der Einsatz von Lasern, ermöglichen ein sehr präzises Abtragen von ungewollten Teilen der Ummantelung.

Die oben genannte Aufgabe wird weiterhin insbesondere gelöst durch ein Verfahren zur Faserzentrierung einer Leitung, insbesondere der Faser einer optischen Leitung, wobei das Verfahren die Schritte aufweist: Entfernen einer Ummantelung der Leitung in einem ersten Bereich, Fixieren der Faser in dem ersten Bereich mit Hilfe einer Fixiervorrichtung, wobei die Fixiervorrichtung einen gleichmäßigen Außenradius um die Fasermitte bildet, und Abtragen der Ummantelung in einem zweiten Bereich der Leitung, wobei nur die Ummantelung abgetragen wird, die eine größere Entfernung zur Fasermitte aufweist als der Außenradius.

Der erste Bereich der Leitung umfasst bevorzugt ein freies Ende der Leitung. Die Leitung kann in dem ersten Bereich einfach fixiert werden. Das Verfahren läuft bevorzugt automatisiert ab. Über Sensoren, insbesondere optische Sensoren, kann der Verlauf des Verfahrens überwacht werden. Das Verfahren ist schnell und einfach durchzuführen und bietet ein präzises Ergebnis, nämlich die konzentrische Anordnung der Faser zur umgebenden Ummantelung, zumindest in einem Teilbereich der Leitung. Überflüssige Ummantelung kann einfach entsorgt werden. Die Entfernung zur Fasermitte meint einen Abstand in radialer Richtung der Leitung.

Bevorzugt umfasst das Fixieren ein vollständiges Umschließen der Faser in Umfangsrichtung durch die Fixiervorrichtung. Durch das vollständige Umschließen sind Fehlstellungen oder Schieflagen der Faser ausgeschlossen.

Bevorzugt umfasst das Abtragen der Ummantelung im zweiten Bereich der Leitung ein Verschieben einer Bearbeitungsvorrichtung in axialer Richtung der Leitung entlang eines äußeren Umfangs der Fixiervorrichtung. Das Verfahren kann dadurch sehr einfach und robust gehalten werden.

Bevorzugt weist das Verfahren weiterhin den Schritt auf: Befestigen einer Ferrule oder eines Kontaktes zumindest im zweiten Bereich der Leitung. Die Leitung kann über die Ferrule oder den Kontakt für eine Steckverbindung konfektioniert und genutzt werden.

Die folgende Beschreibung von Ausführungsformen erfolgt unter Bezugnahme auf die begleitenden Figuren. Dabei zeigt:
- Figs. 1a, 1b: eine Querschnitts- (Fig. 1a) und eine Längsansicht (Fig. 1b) einer Ausführungsform einer Idealform einer Leitung;
- Figs. 2a, 2b: eine Querschnitts- (Fig. 2a) und eine Längsansicht (Fig. 2b) einer Ausführungsform einer Realform einer Leitung;
- Figs. 3a, 3b: eine Querschnitts- (Fig. 3a) und eine Längsansicht (Fig. 3b) einer Ausführungsform einer bearbeiteten Realform einer Leitung;
- Fig. 4: eine schematische Darstellung einer Ausführungsform eines ersten Bearbeitungsschritts; und
- Fig. 5: eine schematische Darstellung einer Ausführungsform eines zweiten Bearbeitungsschritts.

Im Folgenden werden bevorzugte Ausführungsformen im Detail mit Bezug auf die beigefügten Figuren beschrieben.

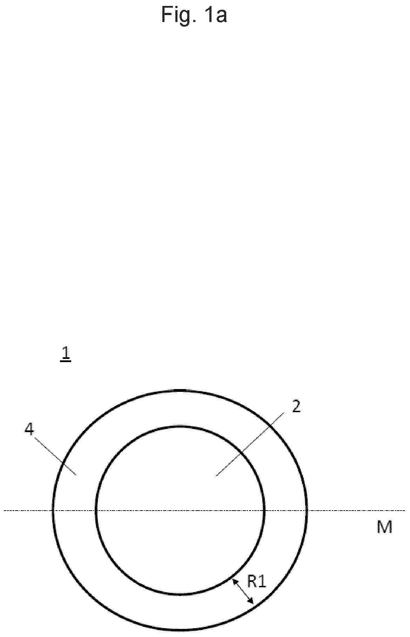

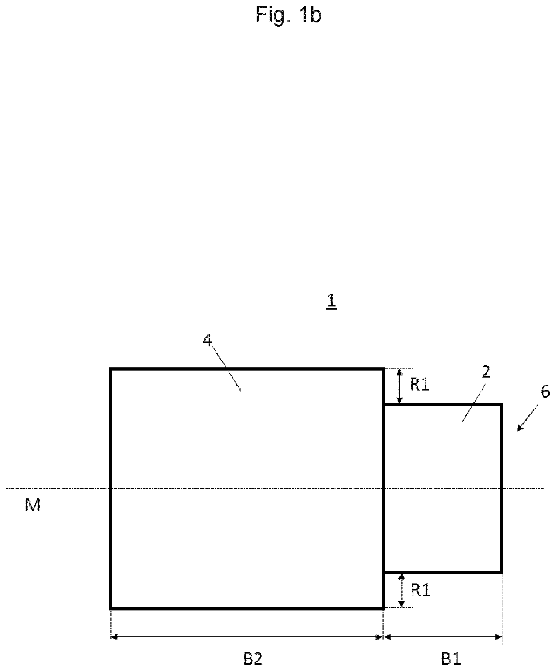

Fig. 1a zeigt eine Ausführungsform eines Idealfalls einer Leitung 1 im Querschnitt, und Fig. 1b zeigt die Leitung 1 im Längsschnitt. Im dargestellten Idealfall liegt die Faser 2 konzentrisch, d.h. genau mittig, in der sie umgebenden Ummantelung 4. Die Ummantelung 4 wurde bei der Herstellung der Leitung 1 auf die Faser 2 aufgebracht und schützt die Faser 2 von negativen Umwelteinflüssen bzw. isoliert sie. Die dargestellte Ummantelung 4 bildet einen Kreisring um die Faser 2 mit einem immer gleichen ersten Radius (bzw. Dicke) R1. Die Faser 2 kann eine optische oder elektrische Faser 2 umfassen. Die Faser 2 und die Ummantelung 4 sind symmetrisch um eine Fasermitte M angeordnet bzw. ausgerichtet. Die Symmetrie erkennt man sowohl im Querschnitt (s. Fig. 1a) als auch entlang einer radialen Richtung Y (s. Fig. 1b), wenn, bevorzugt an einem freien Ende 6 der Leitung 1, zumindest in einem ersten Bereich B1 die Ummantelung 4 entfernt ist und die Faser 2 offen liegt.

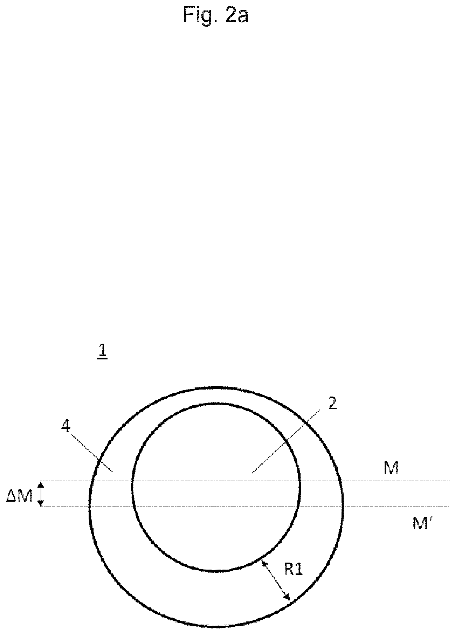

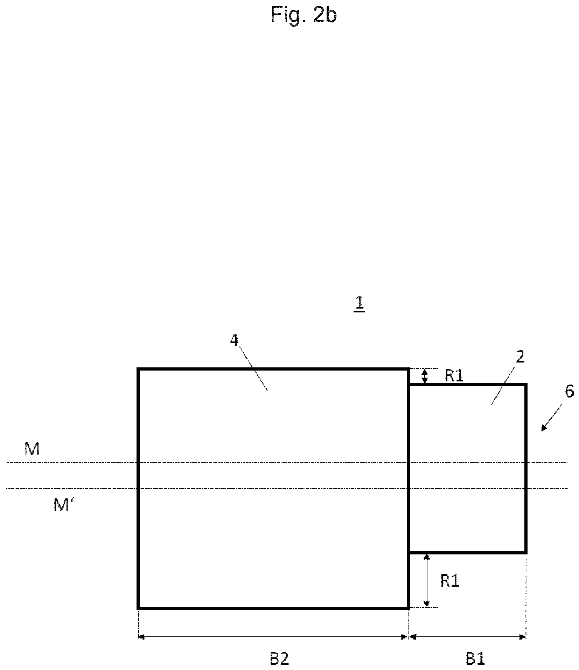

Fig. 2a zeigt eine Ausführungsform eines Realfalls einer Leitung 1 im Querschnitt, und Fig. 2b zeigt die Leitung 1 im Längsschnitt. Im dargestellten Realfall liegt die Faser 2 nicht konzentrisch in der sie umgebenden Ummantelung 4. In manchen Teilbereichen des Umfangs der dargestellten Leitung 1 ist der erste Radius R1 (bzw. die Dicke) der Ummantelung 4 größer als in anderen Bereichen. Durch die nicht konzentrische Anordnung der Faser 2 gibt es einen Versatz ΔM zwischen der Fasermitte M und der Leitungsmitte M', da die Leitungsmitte M' nach dem äußeren Umfang der Leitung 1 bestimmt wird. Würde eine Ferrule oder ein Kontakt auf die Leitung 1 aufgebracht werden, so würde die Ferrule oder der Kontakt konzentrisch zur Leitungsmitte M', jedoch nicht konzentrisch zur Fasermitte M, befestigt werden. Somit ergibt sich ein (axialer) Versatz ΔM bei der Anordnung der Faser 2 in der Ferrule oder dem Kontakt. Verbindet man dann in einer Steckverbindung zwei Ferrulen oder Kontakte, bei denen zumindest eine Ferrule oder ein Kontakt einen Versatz ΔM aufweist, so tritt eine ungewollte optische Dämpfung bzw. eine Änderung des Wellenwiderstands auf, was sich negativ auf die Signalqualität auswirkt.

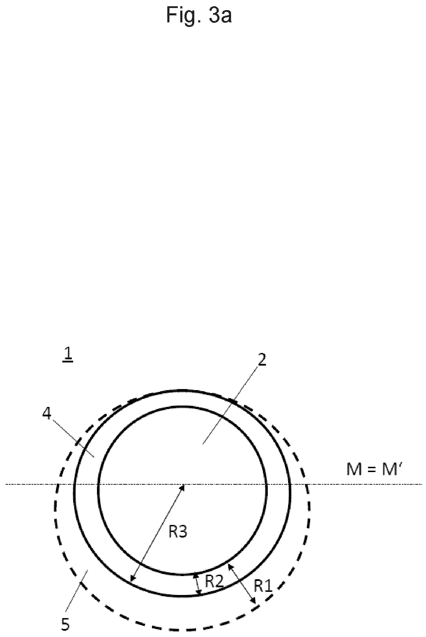

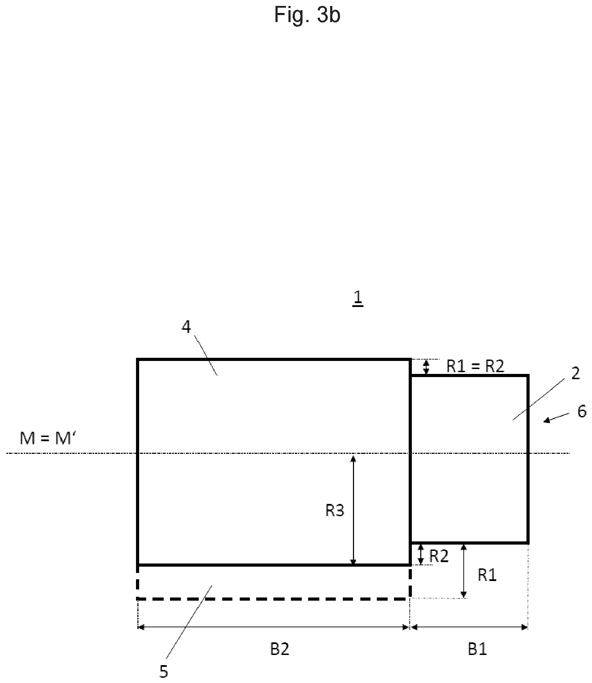

Figs. 3a und 3b zeigen eine Ausführungsform einer Leitung 1 im Realfall mit entfernter Ummantelung 5 (gestrichelte Linie) und einer resultierenden Leitung 1 (durchgezogene Linie), die einen gleichmäßigen zweiten Radius R2 (bzw. Dicke) aufweist, im Querschnitt (Fig. 3a) und im Längsschnitt (Fig. 3b). Bei der dargestellten (resultierenden) Leitung 1 fallen Fasermitte M und Leitungsmitte M' aufeinander, so dass ein Versatz ΔM Null ist. Die dargestellte Leitung 1 weist weiterhin einen gleichmäßigen Außenradius R3 auf. Bei der dargestellten Leitung 1 könnte eine Ferrule oder ein Kontakt, bevorzugt im zweiten Bereich B2, an der Leitung 1 befestigt werden, und die Ferrule oder der Kontakt wäre konzentrisch zur Faser 2 und der Leitung 1 ausgerichtet.

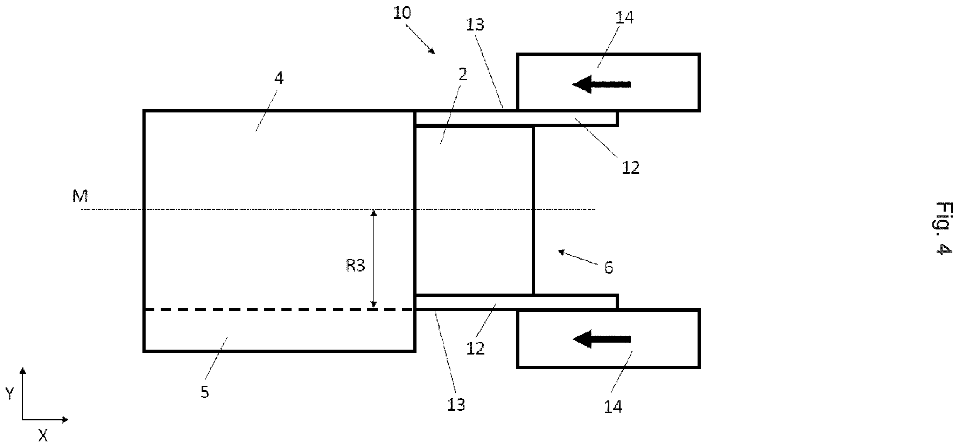

Fig. 4 zeigt eine Ausführungsform einer Vorrichtung 10 zur Faserzentrierung einer Leitung 1. Die Vorrichtung 10 weist zumindest eine Abmantelungsvorrichtung (nicht dargestellt) zum Abmanteln der Leitung 1 in einem ersten Bereich B1, eine Fixiervorrichtung 12, die eingerichtet ist eine Faser 2 der Leitung 1 in dem abgemantelten ersten Bereich B1 zu fixieren, und eine Bearbeitungsvorrichtung 14, die entlang eines äußeren Umfangs 13 der Fixiervorrichtung 12 entlang einer axialen Richtung X der Leitung 1 bewegt werden kann, auf.

Eine Ausführungsform der Fixiervorrichtung 12 umfasst bevorzugt zumindest zwei Segmente, welche die Faser 2 direkt klemmen. Die Anzahl an Segmenten kann auch mehr als zwei umfassen. In einer Ausführungsform umschließt die Fixiervorrichtung 12 die Faser 2 vollumfänglich. Bevorzugt fixiert die Fixiervorrichtung 12 den ersten Bereich B1 der Faser 2 komplett in axialer Richtung X.

Die Bearbeitungsvorrichtung 14 ist eingerichtet Teile der Ummantelung 4 der Leitung 1, welche radial über den äußeren Umfang 13 der Fixiervorrichtung 12 überstehen, in einem zweiten Bereich B2 der Leitung 1 zu entfernen. Der zweite Bereich B2 schließt sich bevorzugt direkt an den ersten Bereich B1 der Leitung 1 an. Die Bearbeitungsvorrichtung 14 kann die Ummantelung 4 durch mechanische Verfahren, insbesondere Fräsen, oder durch thermische Verfahren, insbesondere den Einsatz von Lasern, entfernen. Die verbleibende Ummantelung 4 wird beim Einsatz der Bearbeitungsvorrichtung 14 nicht beschädigt.

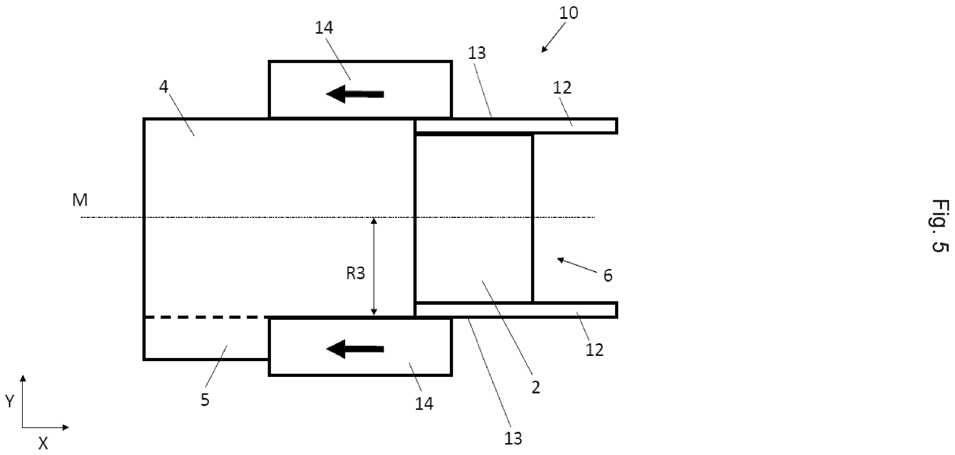

In der Praxis läuft eine Faserzentrierung bevorzugt wie folgt ab: Zunächst erfolgt ein Entfernen einer Ummantelung 4 der Leitung 1 in einem ersten Bereich B1. Danach erfolgt ein Fixieren der Faser 2 in dem ersten Bereich B1. Das Fixieren erfolgt mit Hilfe einer Fixiervorrichtung 12, wobei die Fixiervorrichtung 12 einen gleichmäßigen Außenradius R3 um die Fasermitte M bildet (s. Fig. 4). Danach erfolgt ein Abtragen der Ummantelung 4 in einem zweiten Bereich B2 der Leitung 1. Beim Abtragen wird nur die Ummantelung 4 abgetragen, die eine größere Entfernung zur Fasermitte M aufweist als der Außenradius R3 (s. Fig. 5). In einer Ausführungsform wird die Faser 2 beim Fixieren in Umfangsrichtung durch die Fixiervorrichtung 12 vollständig umschlossen. Das Abtragen der Ummantelung 4 im zweiten Bereich B2 der Leitung 1 erfolgt insbesondere durch ein Verschieben einer Bearbeitungsvorrichtung 14 in axialer Richtung X der Leitung 1 entlang eines äußeren Umfangs 13 der Fixiervorrichtung 12. Im Anschluss an das Abtragen der Ummantelung 4 kann eine Ferrule oder ein Kontakt zumindest im zweiten Bereich B2 der Leitung 1 befestigt werden. Die Befestigung der Ferrule oder des Kontakts kann Teil einer Konfektionierung der Leitung 1 sein.

### BEZUGSZEICHENLISTE

- 1: Leitung
- 2: Faser
- 4: Ummantelung
- 5: zu entfernende/entfernte Ummantelung
- 6: freies Ende
- 10: Vorrichtung
- 12: Fixiervorrichtung
- 13: äußerer Umfang
- 14: Bearbeitungsvorrichtung
- B1: erster Bereich
- B2: zweiter Bereich
- M: Fasermitte
- M': Leitungsmitte
- ΔM: Versatz
- R1: erster Radius
- R2: zweiter Radius
- R3: Außenradius
- X: axiale Richtung
- Y: radiale Richtung

## Patentansprüche

1. Vorrichtung (10) zur Faserzentrierung einer Leitung (1), zumindest aufweisend:
a) eine Abmantelungsvorrichtung zum Abmanteln der Leitung (1) in einem ersten Bereich (B1);
b) eine Fixiervorrichtung (12), die eingerichtet ist eine Faser (2) der Leitung (1) in dem abgemantelten ersten Bereich (B1) zu fixieren; und
c) eine Bearbeitungsvorrichtung (14), die entlang eines äußeren Umfangs (13) der Fixiervorrichtung (12) entlang einer axialen Richtung (X) der Leitung (1) bewegt werden kann; **dadurch gekennzeichnet, dass**
d) die Bearbeitungsvorrichtung (14) eingerichtet ist Teile der Ummantelung (4) der Leitung (1), welche radial über den äußeren Umfang (13) der Fixiervorrichtung (12) überstehen, in einem zweiten Bereich (B2) von der Leitung (1) zu entfernen.

2. Vorrichtung (10) nach Anspruch 1, bei dem die Fixiervorrichtung (12) die Faser (2) direkt klemmt.

3. Vorrichtung (10) nach Anspruch 1 oder 2, bei dem die Fixiervorrichtung (12) die Faser (2) vollumfänglich umschließt.

4. Vorrichtung (10) nach einem der Ansprüche 1 - 3, bei dem die Bearbeitungsvorrichtung (14) die Ummantelung (4) durch mechanische Verfahren, insbesondere Fräsen oder Drehen, entfernt.

5. Vorrichtung (10) nach einem der Ansprüche 1 - 3, bei dem die Bearbeitungsvorrichtung (14) die Ummantelung (4) durch thermische Verfahren, insbesondere den Einsatz von Lasern, entfernt.

6. Verfahren zur Faserzentrierung einer Leitung (1), insbesondere der Faser (2) einer optischen Leitung (1), wobei das Verfahren die Schritte aufweist:
a) Entfernen einer Ummantelung (4) der Leitung (1) in einem ersten Bereich (B1);
b) Fixieren der Faser (2) in dem ersten Bereich (B1) mit Hilfe einer Fixiervorrichtung (12), wobei die Fixiervorrichtung (12) einen gleichmäßigen Außenradius (R3) um die Fasermitte (M) bildet; **gekennzeichnet durch**
c) Abtragen der Ummantelung (4) in einem zweiten Bereich (B2) der Leitung (1), wobei nur die Ummantelung (4) abgetragen wird, die eine größere Entfernung zur Fasermitte (M) aufweist als der Außenradius (R3).

7. Verfahren nach Anspruch 6, bei dem das Fixieren ein vollständiges Umschließen der Faser (2) in Umfangsrichtung durch die Fixiervorrichtung (12) umfasst.

8. Verfahren nach Anspruch 6 oder 7, bei dem das Abtragen der Ummantelung (4) im zweiten Bereich (B2) der Leitung (1) ein Verschieben einer Bearbeitungsvorrichtung (14) in axialer Richtung (X) der Leitung (1) entlang eines äußeren Umfangs (13) der Fixiervorrichtung (12) umfasst.

9. Verfahren nach einem der Ansprüche 6 - 8, weiterhin aufweisend den Schritt: Befestigen einer Ferrule oder eines Kontaktes zumindest im zweiten Bereich (B2) der Leitung (1).

## Claims

1. Device (10) for the fibre centring of a line (1), at least having:
a) a stripping device for stripping the line (1) in a first region (B1);
b) a fixing device (12) which is configured to fix a fibre (2) of the line (1) in the stripped first region (B1); and
c) a machining device (14) which can be moved along an outer circumference (13) of the fixing device (12) along an axial direction (X) of the line (1), **characterized in that**
d) the machining device (14) is configured to remove from the line (1) parts of the sheathing (4) of the line (1) that project radially beyond the outer circumference (13) of the fixing device (12) in a second region (B2).

2. Device (10) according to Claim 1, wherein the fixing device (12) clamps the fibre (2) directly.

3. Device (10) according to Claim 1 or 2, wherein the fixing device (12) encloses the fibre (2) about the entire circumference.

4. Device (10) according to one of Claims 1 to 3, wherein the machining device (14) removes the sheathing (4) by means of mechanical methods, in particular milling or turning.

5. Device (10) according to one of Claims 1 to 3, wherein the machining device (14) removes the sheathing(4) by thermal processes, in particular the use of lasers.

6. Method for the fibre centring of a line (1), in particular the fibre (2) of an optical line (1), wherein the method comprises the following steps:
a) removing a sheathing (4) of the line (1) in a first region (B1);
b) fixing the fibre (2) in the first region (B1) with the aid of a fixing device (12), wherein the fixing device (12) forms a uniform external radius (R3) about the fibre centre (M); **characterized by**
c) subtracting the sheathing (4) in a second region (B2) of the line (1), wherein only the sheathing (4) that has a distance from the fibre centre (M) greater than the external radius (R3) is subtracted.

7. Method according to Claim 6, wherein the fixing comprises enclosing the fibre (2) completely in the circumferential direction by the fixing device (12).

8. Method according to Claim 6 or 7, wherein the subtraction of the sheathing (4) in the second region (B2) of the line (1) comprises displacing a machining device (14) in the axial direction (X) of the line (1) along an outer circumference (13) of the fixing device (12).

9. Method according to one of Claims 6 to 8, furthermore comprising the following step:
fastening a ferrule or a contact at least in the second region (B2) of the line (1).

## Revendications

1. Dispositif (10) pour le centrage de fibres d'une ligne (1), présentant au moins :
a) un dispositif de dénudage pour dénuder la ligne (1) dans une première zone (B1) ;
b) un dispositif de fixation (12) qui est adapté pour fixer une fibre (2) de la ligne (1) dans la première zone dénudée (B1) ; et
c) un dispositif de traitement (14) qui peut être déplacé le long d'une circonférence extérieure (13) du dispositif de fixation (12) le long d'une direction axiale (X) de la ligne (1) ; **caractérisé en ce que**
d) le dispositif de traitement (14) est adapté pour enlever des parties de la gaine (4) de la ligne (1), qui dépassent radialement de la circonférence extérieure (13) du dispositif de fixation (12), dans une deuxième zone (B2) de la ligne (1).

2. Dispositif (10) selon la revendication 1, dans lequel le dispositif de fixation (12) serre directement la fibre (2).

3. Dispositif (10) selon la revendication 1 ou 2, dans lequel le dispositif de fixation (12) entoure entièrement la fibre (2).

4. Dispositif (10) selon l'une quelconque des revendications 1 à 3, dans lequel le dispositif de traitement (14) enlève la gaine (4) par des procédés mécaniques, notamment par fraisage ou tournage.

5. Dispositif (10) selon l'une quelconque des revendications 1 à 3, dans lequel le dispositif de traitement (14) enlève la gaine (4) par des procédés thermiques, notamment l'utilisation de lasers.

6. Procédé pour le centrage de fibre d'une ligne (1), notamment de la fibre (2) d'une ligne optique (1), le procédé présentant les étapes suivantes :
a) l'enlèvement d'une gaine (4) de la ligne (1) dans une première zone (B1) ;
b) la fixation de la fibre (2) dans la première zone (B1) à l'aide d'un dispositif de fixation (12), le dispositif de fixation (12) formant un rayon extérieur uniforme (R3) autour du centre de la fibre (M) ; **caractérisé par**
c)l'élimination de la gaine (4) dans une deuxième zone (B2) de la ligne (1), en n'éliminant que la gaine (4) qui présente une distance par rapport au centre de la fibre (M) plus grande que le rayon extérieur (R3).

7. Procédé selon la revendication 6, dans lequel la fixation comprend un enveloppement complet de la fibre (2) dans la direction circonférentielle par le dispositif de fixation (12).

8. Procédé selon la revendication 6 ou 7, dans lequel l'élimination de la gaine (4) dans la deuxième zone (B2) de la ligne (1) comprend un déplacement d'un dispositif de traitement (14) dans la direction axiale (X) de la ligne (1) le long d'une circonférence extérieure (13) du dispositif de fixation (12).

9. Procédé selon l'une quelconque des revendications 6 à 8, comprenant en outre l'étape suivante :
la fixation d'une ferrule ou d'un contact au moins dans la deuxième zone (B2) de la ligne (1).
